# EUROPÄISCHE PATENTSCHRIFT

(11) **EP 3 331 748 B1**
(45) Veröffentlichungstag und Bekanntmachung des Hinweises auf die Patenterteilung: **11.09.2019**
(21) Anmeldenummer: 16745091.5
(22) Anmeldetag: 25.07.2016
(51) Int. Cl.: B62D 1/184

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 05.08.2015 DE 102015214963
(43) Veröffentlichungstag der Anmeldung: 13.06.2018
(73) Patentinhaber: ThyssenKrupp Presta AG, 9492 Eschen (LI); thyssenkrupp AG, 45143 Essen (DE)
(72) Erfinder: MILLER, Marvin, Tipton, IN 46072 (US); PICHONNAT, Christian, Indianapolis, IN 46236 (US); MCCLELLAND, Luke, lndianapolis, IN 46220 (US)
(74) Vertreter: thyssenkrupp Intellectual Property GmbH
(86) Internationale Anmeldenummer: PCT/EP2016/067623
(87) Internationale Veröffentlichungsnummer: WO 2017/021182

(56) Entgegenhaltungen:
- DE-A1- 19 820 043
- DE-A1-102010 016 679
- US-A- 5 527 068

## Beschreibung

### Stand der Technik

Die Erfindung betrifft eine Lenksäule für ein Kraftfahrzeug, mit einer Stelleinheit, in der eine Lenkspindel um eine Längsachse drehbar gelagert ist, und mit einer Trageinheit, die ausgebildet ist zur Verbindung der Stelleinheit mit der Karosserie eines Kraftfahrzeugs und die zwei Seitenwangen aufweist, zwischen denen die Stelleinheit angeordnet ist und die quer zur Längsachse durchgehende Öffnungen aufweisen, durch die sich ein Spannbolzen einer Spannvorrichtung erstreckt, die eine Hubmechanik aufweist, die sich an der einen Seitenwange abstützt und in eine Fixierstellung bringbar ist zur Ausübung einer Zugkraft auf den Spannbolzen, der sich an der anderen Seitenwange über ein Widerlager abstützt, zur Verspannung der Seitenwangen mit der Stelleinheit, wobei das Widerlager ein Befestigungselement aufweist, welches bezüglich der Längserstreckung des Spannbolzens fixiert mit einem Befestigungsabschnitt des Spannbolzens zugfest verbunden ist.

Bei verstellbaren Lenksäulen für Kraftfahrzeuge ist die Lenkspindel, an deren bezogen auf die Fahrtrichtung hinteren Ende das Lenkrad angebracht ist, in einer Stelleinheit drehbar gelagert, die zur Einstellung der Lenkradposition relativ zur Fahrzeugkarosserie positioniert und fixiert werden kann. Hierzu ist die Stelleinheit oder eine die Stelleinheit lagernde Manteleinheit zwischen den beiden gabelartig angeordneten Seitenwangen einer karosseriefest angebrachten Trageinheit angeordnet. Die Seitenwangen können durch Betätigung einer Spannvorrichtung, auch als Feststell- oder Klemmvorrichtung bezeichnet, gegeneinander zusammengedrückt und zum Feststellen beiderseits gegen die dazwischen befindliche Stelleinheit bzw. Manteleinheit angepresst werden. Dadurch wird die Stelleinheit im Wesentlichen kraftschlüssig zwischen den Seitenwangen eingespannt und wird somit in der Trageinheit relativ zur Karosserie fixiert. Durch Lösen der Spannvorrichtung wird die Fixierung aufgehoben und die Stelleinheit kann zwischen den Seitenwangen bewegt werden, so dass die Lenkradposition relativ zur Fahrerposition eingestellt werden kann.

In der Spannvorrichtung einer gattungsgemäßen Lenksäule wird die Spannkraft durch eine Hubmechanik erzeugt und mittels eines Spannbolzens auf die Seitenwangen übertragen. Dabei stützt sich die Hubmechanik an der einen Seitenwange auf der Außenseite, die der Stelleinheit abgewandt ist, ab, und übt beim Feststellen eine Zugkraft in Richtung der Spannbolzen-Längsachse auf den Spannbolzen aus, der durch einander gegenüberliegende Öffnungen in den Seitenwangen hindurchgeführt ist. Über ein fest angebrachtes Widerlager stützt sich der Spannbolzen von außen an der anderen Seitenwange ab, so dass die beiden Seitenwangen durch die Zugkraft gegeneinander zusammengedrückt werden.

Die Betätigung der Hubmechanik zum Feststellen und Lösen erfolgt durch eine Drehung des Spannbolzens um seine Spannbolzen-Längsachse entweder manuell über einen daran angebrachten Betätigungshebel oder motorisch durch einen Stellantrieb. Eine derartige Hubmechanik ist beispielsweise in der DE 10 2010 016 679 B4 beschrieben, bei der ein erster Nockenträger drehfest auf der einen Seitenwange angeordnet ist und ein zweiter Nockenträger mit gegen den ersten Nockenträger gerichteten Nocken an dem Spannbolzen angebracht ist. Durch eine Verdrehung des Spannbolzens aus einer Winkelstellung, in der die Nocken des einen Nockenträgers zwischen die Nocken des anderen Nockenträgers eingreifen, in eine relative Winkelposition, in der die Nockenspitzen gegeneinander anliegen, werden die Nockenträger in Richtung der Spannbolzen-Längsachse voneinander abgehoben. Folglich wird durch diesen Hub eine Zugkraft auf den Spannbolzen ausgeübt. Alternativ können auch andere Hubmechanismen zum Einsatz kommen, die eine Umsetzung der Drehbewegung des Spannbolzens in eine translatorische Verspannung der Seitenwangen erlauben, beispielsweise Keilscheiben-Nocken- oder Kippstift-Spannsysteme, wie aus der DE 44 00 306 A1 bekannt, oder dergleichen.

Es sind auch Spannsysteme mit einem drehbaren Spannbolzen bekannt, bei denen die Zugkraft durch gegenläufige Gewinde auf dem Spannbolzen auf beiden Seiten der Seitenwangen erzeugt wird, beispielsweise aus der US 5527068. Diese Bauart ist allerdings durch die relativ zueinander bewegbaren Bauteile hinsichtlich Montage und Betriebssicherheit nachteilig. Bauartbedingt ist dabei das Widerlager relativ zur Längserstreckung des Spannbolzens bewegbar, es ist entsprechend kein bezüglich der Längserstreckung des Spannbolzens fixiertes Widerlager vorhanden wie bei einer gattungsgemäß zugrunde gelegten Spannvorrichtung.

Bei den gattungsgemäßen Lenksäulen ist das Widerlager zugfest mit dem Spannbolzen in einer festen Position in der Längserstreckung des Spannbolzens fix verbunden, um die Zugkraft sicher übertragen zu können und sich beim Betätigen der Spannvorrichtung nicht vom Spannbolzen zu lösen bzw. sich nicht in der Längserstreckung des Spannbolzens zu bewegen.

Nachteilig bei den bekannten Spannvorrichtungen ist, dass zur Ausbildung des Widerlagers der Befestigungsabschnitt des Spannbolzens einen nach außen über Außenseite der Seitenwange vorstehenden Gewindeabschnitt umfasst, auf den als Befestigungselement eine Mutter aufgeschraubt ist, die sich mit einer Axialfläche von außen gegen die Seitenwange abstützt. Dadurch steht das Befestigungselement relativ weit nach außen vor, wodurch im Fahrzeug ein entsprechend großer Bauraum zur Verfügung stehen muss.

Angesichts der vorangehend erläuterten Problematik ist es eine Aufgabe der vorliegenden Erfindung, eine verbesserte Lenksäule zur Verfügung zu stellen, welche verbesserte Einbaumöglichkeiten bietet.

### Darstellung der Erfindung

Zur Lösung der vorgenannten Problematik wird erfindungsgemäß vorgeschlagen, dass das Befestigungselement einen Kopfabschnitt aufweist, der eine gegen die Seitenwange abstützbare Stützfläche aufweist, von der ein Schaftabschnitt (Hülsenabschnitt) absteht, der sich durch die Öffnung der Seitenwange erstreckt und mit dem Befestigungsabschnitt des Spannbolzens verbunden ist.

Erfindungsgemäß hat das Befestigungselement zwei funktionale Abschnitte, nämlich den Schaftabschnitt, der zur Verbindung mit dem Spannbolzen dient, und den Kopfabschnitt, dessen Funktion der Übertragung der Zugkraft, d.h. der Spannkraft von außen auf die Seitenwange, dient. Dadurch ist es nicht mehr erforderlich, dass der Kopfabschnitt in Längsrichtung, d.h. Axialrichtung des Spannbolzens gemessen relativ dick sein muss, um eine sichere und feste Verbindung auf dem Befestigungsabschnitt des Spannbolzens zu ermöglichen, um beispielsweise mehrere Gewindegänge aufzunehmen wie die im Stand der Technik bekannte Mutter. Stattdessen kann der Kopfabschnitt deutlich flacher ausfallen als eine Mutter, wodurch der Spannbolzen weniger über die Seitenwange übersteht und der erforderliche Bauraum verkleinert wird. Praktisch kann der Kopfabschnitt tellerartig ausgebildet sein, mit mindestens einer relativ zum Schaftabschnitt vorstehenden Stützfläche, deren Flächennormale in Richtung des Schaftabschnitts weist und von außen gegen die Seitenwange gerichtet ist.

Von dem Kopfabschnitt erstreckt sich in Richtung des Spannbolzens der Schaftabschnitt, das heißt der Schaftabschnitt befindet sich zwischen dem Kopfabschnitt und dem einen Ende des Spannbolzens, welches in der Hubmechanik gehalten wird ist und auf Zug belastet werden kann. Dabei erstreckt sich der Schaftabschnitt durch die Öffnung der Seitenwange hindurch, so dass die Verbindung mit dem Befestigungsabschnitt des Spannbolzens innerhalb der Trageinheit zwischen den Seitenwangen erfolgen kann. Die Länge des Spannbolzens kann so bemessen werden, dass der Spannbolzen im Bereich des Widerlagers nicht über die Seitenwange vorsteht. Daraus resultiert der besondere Vorteil, dass sich die Verbindung über einen größeren Abschnitt in Längsrichtung des Spannbolzens erstrecken und entsprechend sicher gestaltet werden kann, ohne dass Bauraum außerhalb der Seitenwangen benötigt wird.

Eine Ausführung der Erfindung sieht vor, dass das Befestigungselement drehfest mit dem Spannbolzen verbunden ist. Dadurch wird eine belastbare dreh- und zugfeste Verbindung realisiert, mit welcher das Befestigungselement relativ zur Längserstreckung fest auf dem Spannbolzen fixiert ist. Die Drehbewegung zwischen Spannbolzen und Seitenwangen kann durch Lagervorrichtungen aufgenommen werden.

Es ist vorteilhaft, dass das Befestigungselement über eine unlösbare Verbindung mit dem Spannbolzen verbunden ist. Wie bereits erwähnt, bildet die Lenksäule und damit die Spannvorrichtung ein sicherheitsrelevantes Bauteil des Fahrzeugs. Diesbezüglich sorgt eine unlösbare Anbringung des Befestigungselements auf dem Spannbolzen dafür, dass das Befestigungselement sich unter keinen denkbaren Betriebszuständen lösen kann und dadurch die geforderte Funktionssicherheit erreicht wird.

Eine vorteilhafte unlösbare Verbindung kann beispielsweise dadurch realisiert werden, dass der Befestigungsabschnitt des Spannbolzens einen Außengewindeabschnitt umfasst, der in ein damit korrespondierendes Innengewinde im Schaftabschnitt des Befestigungselements eingeschraubt und unlösbar gesichert ist. In dieser Bauform ist der Schaftabschnitt als hülsenförmige Mutter ausgebildet. Zur Montage kann das Befestigungselement mit dem Schaftabschnitt durch die Öffnung in der Seitenwange hindurch geführt und auf den durch gegenüberliegende Seitenwange hindurchgeführten Spannbolzen aufgeschraubt werden. An den Gewinden kann ein an sich bekannter axialer Anschlag vorgesehen sein, beispielsweise ein Bund oder Absatz am Spannbolzen, gegen den das Befestigungselement angezogen wird, wodurch eine präzise und sichere axiale Positionierung des Befestigungselements auf dem Spannbolzen erreicht wird. Die unlösbare Sicherung des Gewindes ist erforderlich, damit sich die Verbindung nicht durch die Drehung des Spannbolzens beim Betätigen der Spannvorrichtung lösen kann. Die Sicherung kann im aufgeschraubten Zustand beispielsweise durch eine Verstemmung erreicht werden, wobei Material zur Blockierung der Gewindegänge plastisch verformt wird. Alternativ oder zusätzlich kann eine stoffschlüssige Fixierung des Gewindes durch eine lokale Löt- oder Schweißstelle erfolgen. In einer weiteren Alternative kann eine stoffschlüssige Verklebung der Gewindegänge dadurch vorgenommen werden, dass Klebstoff in das Gewinde zwischen Spannbolzen und Befestigungselement eingebracht wird. Die Applikation des Klebstoffs kann, wie dies bei sogenannten selbstsichernden Gewinden bekannt ist, mit am Gewinde vor der Montage anhaftenden, in Mikrokapseln eingeschlossenem Klebstoff, erfolgen. Beim Aufschrauben platzen die Mikrokapseln und geben den Klebstoff selbsttätig zwischen den Gewindegängen frei, so dass die Montage besonders rationell ist.

Eine bevorzugte Ausführung der Erfindung sieht vor, dass der Schaftabschnitt zylindrisch ausgebildet ist. Die zylindrische Form ermöglicht eine einfache und ungehinderte drehbare Aufnahme des in dem Schaftabschnitt angebrachten Spannbolzens innerhalb der Öffnung der Seitenwange, wie dies im Stand der Technik durch einen zylindrischen Abschnitt des Spannbolzens zuverlässig realisiert ist.

Der Kopfabschnitt kann ebenfalls zylindrisch ausgebildet sein oder zumindest eine zylindrische Grundform haben, und kann vorzugsweise koaxial zum Schaftabschnitt angeordnet sein. Dadurch kann das Befestigungselement rationell als kostengünstiges Dreh- bzw. Pressteil zur Verfügung gestellt werden.

Es kann vorgesehen sein, dass der Kopfabschnitt einen Werkzeugansatz aufweist. Der Werkzeugansatz kann beispielsweise als Außen-Mehrkant auf einer zylindrischen Grundform ausgebildet sein, etwa in Form eines bekannten Sechskant-Schraubenkopfes, oder als Innen-Mehrkant, der von der dem Schaftabschnitt abgewandten Außenseite des Kopfabschnitts zugänglich ist. Der Werkzeugansatz ist bevorzugt koaxial zu einer Gewindebohrung im Schaftabschnitt angeordnet und ermöglicht es dadurch, mittels eines passenden Werkzeugs, beispielsweise eines Schrauben- oder Sechskantschlüssels, das Befestigungselement von außen mit einem in der Lenksäule vormontierten Spannbolzen zu verschrauben.

Weiterhin ist es vorteilhaft, dass gemessen in axialer Richtung des Spannbolzens der Schaftabschnitt eine größere Länge hat als der Kopfabschnitt. Durch eine kleine Länge in axialer Richtung, das entspricht der Längsrichtung des Spannbolzens, kann der Kopfabschnitt teller- oder scheibenförmig flach ausgebildet sein, um außerhalb der Seitenwange so wenig Bauraum wie möglich zu beanspruchen. Der Schaftabschnitt kann in Längsrichtung so lang ausgebildet sein, dass zum einen eine sichere Fixierung mit dem Befestigungsabschnitt des Spannbolzens erfolgen kann und zum anderen eine ungehindert drehbare Aufnahme bzw. Lagerung in den Seitenwangen möglich ist. Ein Vorteil der Erfindung ist, dass die Länge von Kopf- und Schaftabschnitt unabhängig voneinander an die jeweiligen Anforderungen angepasst werden kann, so dass unter Berücksichtigung der geforderten Zugkraft der Kopfabschnitt so flach wie möglich gestaltet werden kann, und der Schaftabschnitt so lang wie zur Fixierung auf dem Spannbolzen optimal ist, ohne dass der benötigte Bauraum außerhalb der Seitenwangen in unerwünschter Weise vergrößert würde.

Die Hubmechanik kann mit einem manuellen Betätigungselement verbunden sein. Das manuelle Betätigungselement kann als Handhebel ausgebildet sein, der drehfest auf dem Spannbolzen angebracht ist. Damit kann der Spannbolzen zum Feststellen und Lösen der Spannvorrichtung von Hand betätigt werden. Alternativ ist es möglich, dass die Hubmechanik verbunden ist mit einem motorischen Hubantrieb. Der Hubantrieb weist beispielsweise eine elektrischen Stellantrieb auf, der ein motorisches Feststellen und Lösen der Lenksäule ermöglicht, beispielsweise zur automatisierten, individuellen Einstellung der Lenkradposition.

Eine Ausführungsform der Erfindung sieht vor, dass die Stelleinheit eine Manteleinheit aufweist, welche mit den Öffnungen in den Seitenwangen fluchtende Durchgangsöffnungen aufweist, durch die sich zumindest teilweise der Schaftabschnitt des Befestigungselements erstreckt. Bei Lenksäulen, die eine Längsverstellung in Richtung der Lenksäulen-Längsachse und eine Höhenverstellung quer zur Längsachse vorsehen, weist die Stelleinheit ebenfalls Öffnungen auf, durch die sich der Spannbolzen erstreckt. Üblicherweise sind diese Durchgangsöffnungen in einer Manteleinheit ausgebildet. Das erfindungsgemäße Befestigungselement kann sich nicht nur durch die Seitenwangen, sondern auch durch die Manteleinheit erstrecken. Dadurch ist sichergestellt, dass die angestrebte Reduzierung des Bauraums außerhalb der Seitenwangen bei sämtlichen denkbaren Bauformen von Lenksäulen erreicht werden kann.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Lenksäule in einer schematischen perspektivischen Ansicht,
- Figur 2: einen Querschnitt durch eine Lenksäule gemäß Figur 1 in Löseposition,
- Figur 3: einen Querschnitt durch eine Lenksäule gemäß Figur 1 in Feststellposition,,
- Figur 4: eine Teilansicht einer Spannvorrichtung in einer auseinander gezogenen perspektivischen Darstellung,
- Figur 5: eine axiale Ansicht auf ein erfindungsgemäßes Befestigungselement.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

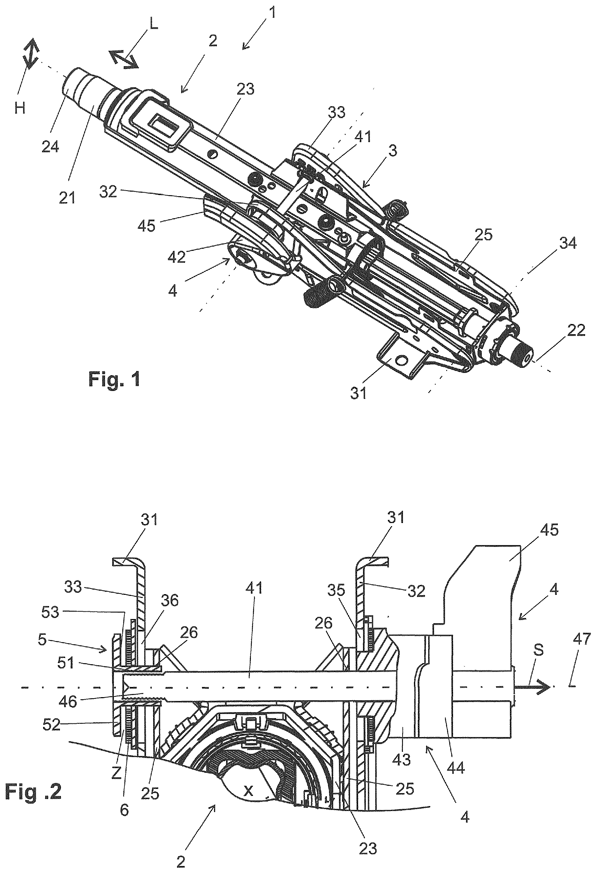

Figur 1 zeigt eine Lenksäule 1 in einer perspektivischen Ansicht schräg von oben, wobei in der Zeichnung das lenkradseitige, in Fahrtrichtung vorn liegende Ende nach oben links zeigt, und das lenkgetriebeseitige, in Fahrtrichtung hinten liegende Ende nach unten rechts weist.

Die Lenksäule 1 umfasst eine Stelleinheit 2, mit einer Lenkspindel 21, die um ihre Längsachse 22 drehbar in einem Mantelrohr 23 gelagert ist. Am hinteren Ende weist die Lenkspindel einen Befestigungsabschnitt 24 zur Anbringung eines hier nicht dargestellten Lenkrads auf.

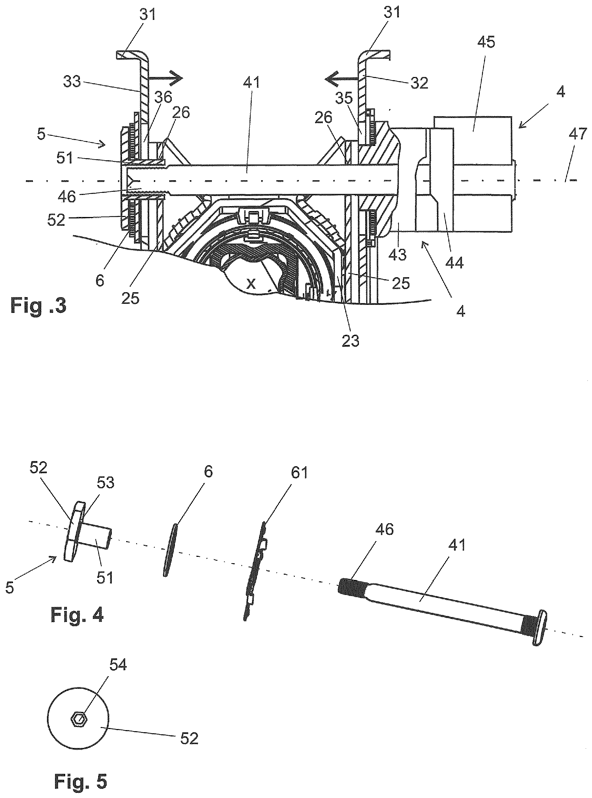

Die Trageinheit 3 weist Befestigungsmittel 31 zur Anbringung der Lenksäule 1 an einer hier nicht dargestellten Fahrzeugkarosserie auf. Von den Befestigungsmitteln 31 stehen zwei gegenüberliegende Seitenwangen 32 und 33 nach unten ab, wie dies in der Querschnittsansicht von Figur 2 und 3 erkennbar ist. Zwischen den Seitenwangen 32 und 33 befindet sich die Stelleinheit 2, wobei das Mantelrohr 23 in einer Manteleinheit 25 gelagert ist, genauer in dem Zwischenhebel der Manteleinheit 23. Die Manteleinheit 23 ist an der Trageinheit 3 um eine quer zur Längsachse 22 durch die Seitenwangen 32, 33 gehende Querachse 34 verschwenkbar gelagert, zur Verstellung eines am Befestigungsabschnitt 24 angebrachten Lenkrads in Höhenrichtung H, wie in Figur 1 mit einem Doppelpfeil angedeutet. Zur Verstellung des Lenkrads entlang der Längsachse 22 in Längsrichtung L ist das Mantelrohr 23 in der Manteleinheit 25 längsverschiebbar gelagert, wie ebenfalls mit einem Doppelpfeil angedeutet.

Aus Figur 2 und 3 ist entnehmbar, wie das Mantelrohr 23 innerhalb der Manteleinheit 25 zwischen den Seitenwangen 32 und 33 angebracht ist.

Eine Spannvorrichtung 4 weist einen Spannbolzen 41 und ein Spanngetriebe in Form einer Hubmechanik 42 auf, welches in der beispielhaft dargestellten Ausführung als Nocken-Klemmgetriebe ausgebildet ist. Dieses umfasst eine erste Nockenscheibe 43, die sich von außen auf der einen Seitenwange 32 abstützt, und eine zweite Nockenscheibe 44, die drehfest mit dem Spannbolzen 41 verbunden ist. Mit der zweiten Nockenscheibe 44 und dem Spannbolzen 41 ist ebenfalls drehfest ein Betätigungshebel 45 verbunden.

Der Spannbolzen 41 erstreckt sich durch quer zur Längsachse 22 miteinander fluchtende Öffnungen 35 und 36 in den Seitenwangen 32 und 33 und ebenfalls durch damit fluchtende Durchgangsöffnungen 26 in der Manteleinheit 25.

Auf dem Spannbolzen 41 ist im Bereich seines von der Hubmechanik 42 abgewandten Endes ein Befestigungsabschnitt 46 mit Außengewinde ausgebildet.

An dem Befestigungsabschnitt 46 ist ein erfindungsgemäßes Befestigungselement 5 angebracht. Dieses weist einen Schaftabschnitt 51 auf, der außen zylindrisch geformt ist und ein koaxiales Innengewinde hat, welches auf das Außengewinde des Befestigungsabschnitts 46 aufgeschraubt ist. Der Schaftabschnitt 51 erstreckt sich koaxial von einem Kopfabschnitt 52 des Befestigungselements 5 in Richtung der Spannbolzenachse 47 zur Hubmechanik 42.

Es ist denkbar und möglich den Schaftabschnitt 51 lösbar mit dem Befestigungsabschnitt 46 zu verbinden.

Es ist vorteilhaft, wenn der Schaftabschnitt 51 unlösbar mit dem Befestigungsabschnitt 46 verbunden ist, beispielsweise durch eine Verstemmung der Gewinde, d.h. eine plastische Materialverformung zur Blockierung der Gewindegänge, oder durch eine stoffschlüssige Verbindung mittels eines zwischen Schaftabschnitt 51 und Befestigungsabschnitt 46 eingebrachten Klebstoffs. Damit ist das Befestigungselement dreh- und zugfest mit dem Spannbolzen 41 verbunden.

Der Kopfabschnitt 52 überragt den Schaftabschnitt 51 radial, d.h. quer zur Spannbolzenachse 47, so dass eine - hier im wesentlichen kreisringförmige - Stützfläche 53 ausgebildet ist, die von außen gegen die Seitenwange 33 gerichtet und gegen diese abstützbar ist. Dadurch wird ein Widerlager an der Seitenwange 33 bezüglich einer Zugbeanspruchung des Spannbolzens ausgebildet.

Die Funktion der Spannvorrichtung 4 wird anhand von Figuren 2 und 3 erläutert: Figur 2 zeigt die gelöste Stellung (Lösestellung) in der keine Spannkraft ausgeübt wird, und folglich das Mantelrohr 23 in der Manteleinheit 25 in Längsrichtung L verschiebbar ist, und die gesamte Stelleinheit 2 mit der Manteleinheit 25 zwischen den Seitenwangen 32 und 33 in Höhenrichtung H auf und ab einstellbar ist. Die Lösestellung ist dadurch gekennzeichnet, dass über das Befestigungselement 5, genauer über dessen Stützfläche 53 keine Kraft von außen auf die Seitenwange 33 ausgeübt wird. Dies ist in Figur 2 dadurch verdeutlicht, dass zwischen der Stützfläche 53 und der Seitenwange 33 ein (übertrieben breit dargestellter) Zwischenspalt Z eingezeichnet ist.

Zum Feststellen wird mittels des Betätigungshebels 45 die Nockenscheibe 44 zusammen mit dem Spannbolzen 41 relativ zur Nockenscheibe 43 verdreht, wodurch eine Zugkraft in Richtung des Spannhubs S auf den Spannbolzen 41 ausgeübt wird.

Durch die zug- und drehfeste Verbindung wird die besagte Zugkraft von dem Kopfabschnitt 52 über die Stützfläche 53 von außen auf die Seitenwange 33 übertragen, wie in Figur 3 dargestellt. Mir derselben Zugkraft stützt sich die Hubmechanik 42 von außen gegen die Seitenwange 32 ab, so dass die beiden Seitenwangen 32 und 33 wie in Figur 3 mit den gegeneinander gerichteten Pfeilen angedeutet gegeneinander zusammengedrückt werden. Dadurch wird die Manteleinheit 25 kraftschlüssig zwischen den Seitenwangen 32 und 33 verspannt, und das Mantelrohr 23 wird seinerseits in der Manteleinheit 25 verspannt. Damit ist die Fixierstellung erreicht, in der die Stelleinheit 2 relativ zur Trageinheit 3 festgestellt ist.

Wie sich aus den Darstellungen in Figuren 2 und 3 ergibt, kann der Kopfabschnitt 52 des Befestigungselements 5 teller- oder scheibenförmig relativ flach ausgebildet werden bezüglich seiner Abmessung in Richtung der Spannbolzenachse 47. Dadurch wird entsprechend wenig Bauraum benötigt. Unabhängig davon kann die Länge des Schaftabschnitts 51 vorgegeben werden, der sich durch die Öffnung 36 in der Seitenwange 33 und der Durchgangsöffnung 26 in der Manteleinheit 25 erstreckt. Die Länge des Schaftabschnitts 51 ermöglicht eine sichere, zug- und drehfeste Verbindung mit dem Spannbolzen, beispielsweise mittels eines unlösbar gesicherten Gewindes.

Figur 4 zeigt schematisch in einer Explosionsdarstellung den Spannbolzen 41 und das Befestigungselement 5. Zwischen der Stützfläche 53 und der Außenseite der Seitenwange kann ein Drucklager ausgebildet sein, welches beispielsweise ein Lagerelement 6 in Form eines Nadelkranzes eines Wälzlagers aufweist, und eine Lagerbahn 61 für das Lagerelement 6. Dadurch kann eine leichtgängige Drehbarkeit des Spannbolzens 41 zum Feststellen und Lösen sichergestellt werden.

In der Ausführung gemäß Figur 4 weist der Kopfabschnitt 52 einen Werkzeugansatz 54 in Form eines Außensechskants auf. In einer alternativen Ausführung, die in einer axialen Ansicht in Figur 5 gezeigt ist, ist der Werkzeugansatz als Innensechskant ausgebildet. Jede dieser Ausführungen ermöglicht es, mittels eines geeigneten Werkzeugs das Befestigungselement 5 auf den Spannbolzen 41, die bereits durch die Seitenwangen 32 und 33 hindurch eingesetzt ist, aufzuschrauben und zu sichern.

### Bezugszeichenliste

- 1: Lenksäule
- 2: Stelleinheit
- 21: Lenkspindel
- 22: Längsachse
- 23: Mantelrohr
- 24: Befestigungsabschnitt
- 25: Manteleinheit
- 26: Durchgangsöffnungen
- 3: Trageinheit
- 31: Befestigungsmittel
- 32, 33: Seitenwange
- 34: Querachse
- 35, 36: Öffnungen
- 4: Spannvorrichtung
- 41: Spannbolzen
- 42: Hubmechanik
- 43, 44: Nockenscheibe
- 45: Betätigungshebel
- 46: Befestigungsabschnitt
- 47: Spannbolzenachse
- 5: Befestigungselement
- 51: Schaftabschnitt
- 52: Kopfabschnitt
- 53: Stützfläche
- 54: Werkzeugansatz
- 6: Lagerelement
- 61: Lagerbahn
- H: Höhenrichtung
- L: Längsrichtung
- S: Spannhub
- Z: Zwischenspalt

## Patentansprüche

1. Lenksäule (1) für ein Kraftfahrzeug, mit einer Stelleinheit (2), in der eine Lenkspindel (21) um eine Längsachse (22) drehbar gelagert ist, und mit einer Trageinheit (3), die ausgebildet ist zur Verbindung der Stelleinheit (2) mit der Karosserie eines Kraftfahrzeugs und die zwei Seitenwangen (32, 33) aufweist, zwischen denen die Stelleinheit (2) angeordnet ist und die quer zur Längsachse (22) durchgehende Öffnungen (35, 36) aufweisen, durch die sich ein Spannbolzen (41) einer Spannvorrichtung (4) erstreckt, die eine Hubmechanik (42) aufweist, die sich an der einen Seitenwange (32) abstützt und in eine Fixierstellung bringbar ist zur Ausübung einer Zugkraft auf den Spannbolzen (41), der sich an der anderen Seitenwange (33) über ein Widerlager abstützt, zur Verspannung der Seitenwangen (32, 33) mit der Stelleinheit (2), wobei das Widerlager ein Befestigungselement (5) aufweist, welches bezüglich der Längserstreckung des Spannbolzens (41) fixiert mit einem Befestigungsabschnitt (46) des Spannbolzens (41) zugfest verbunden ist,
**dadurch gekennzeichnet,**
**dass** das Befestigungselement (5) einen Kopfabschnitt (52) aufweist, der eine gegen die Seitenwange (33) abstützbare Stützfläche (53) aufweist, von der ein Schaftabschnitt (51) absteht, der sich durch die Öffnung (36) der Seitenwange (33) erstreckt und mit dem Befestigungsabschnitt (46) des Spannbolzens (41) verbunden ist.

2. Lenksäule nach Anspruch 1, **dadurch gekennzeichnet, dass** das Befestigungselement (5) drehfest mit dem Spannbolzen (41) verbunden ist.

3. Lenksäule nach einem der vorangehenden Ansprüche, **dadurch gekennzeichnet, dass** das Befestigungselement (5) über eine unlösbare Verbindung mit dem Spannbolzen (41) verbunden ist.

4. Lenksäule nach einem der vorangehenden Ansprüche, **dadurch gekennzeichnet, dass** der Befestigungsabschnitt (46) des Spannbolzens (41) einen Außengewindeabschnitt umfasst, der in ein damit korrespondierendes Innengewinde im Schaftabschnitt (51) des Befestigungselements (5) eingeschraubt und unlösbar gesichert ist.

5. Lenksäule nach einem der vorangehenden Ansprüche, **dadurch gekennzeichnet, dass** der Schaftabschnitt (51) des Befestigungselements (5) zylindrisch ausgebildet ist.

6. Lenksäule nach einem der vorangehenden Ansprüche, **dadurch gekennzeichnet, dass** der Kopfabschnitt (52) des Befestigungselements (5) einen Werkzeugansatz (54) aufweist.

7. Lenksäule nach einem der vorangehenden Ansprüche, **dadurch gekennzeichnet, dass** gemessen in axialer Richtung des Spannbolzens (41) der Schaftabschnitt (51) eine größere Abmessung hat als der Kopfabschnitt (52).

8. Lenksäule nach einem der vorangehenden Ansprüche, **dadurch gekennzeichnet, dass** die Hubmechanik (42) verbunden ist mit einem manuellen Betätigungselement (45).

9. Lenksäule nach einem der vorangehenden Ansprüche, **dadurch gekennzeichnet, dass** die Hubmechanik (42) verbunden ist mit einem motorischen Hubantrieb.

10. Lenksäule nach einem der vorangehenden Ansprüche, **dadurch gekennzeichnet, dass** die Stelleinheit (2) eine Manteleinheit (25) aufweist, welche mit den Öffnungen (35, 36) in den Seitenwangen (32, 33) fluchtende Durchgangsöffnungen (26) aufweist, durch die sich zumindest teilweise der Schaftabschnitt (51) des Befestigungselements (5) erstreckt.

## Claims

1. Steering column (1) for a motor vehicle, with a control unit (2), in which a steering spindle (21) is mounted rotatably about a longitudinal axis (22), and with a supporting unit (3), which is designed to connect the control unit (2) to the body of a motor vehicle and which comprises two side cheeks (32, 33), between which the control unit (2) is disposed and which comprise openings (35, 36) running transversely to the longitudinal axis (22), through which a clamping bolt (41) of a clamping device (4) extends, which comprises a lift mechanism (42), which bears against the one side cheek (32) and can be brought into a fixation position for exerting a tension force on the clamping bolt (41), which bears against the other side cheek (33) across an abutment, for the clamping of the side cheeks (32, 33) to the control unit (2), wherein the abutment comprises a fastening element (5), which is fixed relative to the longitudinal dimension of the clamping bolt (41) and connected in tension resistant manner to a fastening section (46) of the clamping bolt (41),
**characterized in that**
the fastening element (5) comprises a head section (52), which has a support surface (53) which can be braced against the side cheek (33), from which a shaft section (51) projects, which extends through the opening (36) of the side cheek (33) and is connected to the fastening section (46) of the clamping bolt (41).

2. Steering column according to Claim 1, **characterized in that** the fastening element (5) is connected to the clamping bolt (41) firm against rotation.

3. Steering column according to one of the preceding claims, **characterized in that** the fastening element (5) is connected by a nonreleasable connection to the clamping bolt (41).

4. Steering column according to one of the preceding claims, **characterized in that** the fastening section (46) of the clamping bolt (41) comprises an external threaded section, which is screwed into a corresponding internal thread in the shaft section (51) of the fastening element (5) and captively secured.

5. Steering column according to one of the preceding claims, **characterized in that** the shaft section (51) of the fastening element (5) is cylindrical in configuration.

6. Steering column according to one of the preceding claims, **characterized in that** the head section (52) of the fastening element (5) has a tool attachment (54).

7. Steering column according to one of the preceding claims, **characterized in that** the shaft section (51) has a larger dimension than the head section (52), measured in the axial direction of the clamping bolt (41).

8. Steering column according to one of the preceding claims, **characterized in that** the lift mechanism (42) is connected to a manual activation element (45).

9. Steering column according to one of the preceding claims, **characterized in that** the lift mechanism (42) is connected to a motorized lift drive.

10. Steering column according to one of the preceding claims, **characterized in that** the control unit (2) comprises a casing unit (25), which has through openings (26) aligned with the openings (35, 36) in the side cheeks (32, 33), through which extends at least partly the shaft section (51) of the fastening element (5).

## Revendications

1. Colonne de direction (1) pour un véhicule automobile, comprenant une unité de réglage (2) dans laquelle un arbre de direction (21) est supporté de manière à pouvoir tourner autour d'un axe longitudinal (22) et comprenant une unité de support (3) qui est réalisée pour relier l'unité de réglage (2) à la carrosserie d'un véhicule automobile et qui présente deux joues latérales (32, 33) entre lesquelles est disposée l'unité de réglage (2) et qui présentent des ouvertures (35, 36) s'étendant en continu transversalement à l'axe longitudinal (22), à travers lesquelles s'étend un boulon de serrage (41) d'un dispositif de serrage (4) qui présente un mécanisme de levage (42) qui s'appuie contre l'une des joues latérales (32) et qui peut être amené dans une position de fixation pour exercer une force de traction sur le boulon de serrage (41) qui s'appuie par le biais d'une butée contre l'autre joue latérale (33), pour serrer les joues latérales (32, 33) avec l'unité de réglage (2), la butée présentant un élément de fixation (5) qui est connecté de manière résistant à la traction à une portion de fixation (46) du boulon de serrage (41) de manière fixée par rapport à l'étendue longitudinale du boulon de serrage (41),
**caractérisée en ce que**
l'élément de fixation (5) présente une portion de tête (52) qui présente une surface d'appui (53) pouvant être appuyée contre la joue latérale (33) et depuis laquelle une portion d'arbre (51) fait saillie, laquelle s'étend à travers l'ouverture (36) de la joue latérale (33) et est connectée à la portion de fixation (46) du boulon de serrage (41) .

2. Colonne de direction selon la revendication 1, **caractérisée en ce que** l'élément de fixation (5) est connecté de manière solidaire en rotation au boulon de serrage (41).

3. Colonne de direction selon l'une quelconque des revendications précédentes, **caractérisée en ce que** l'élément de fixation (5) est connecté au boulon de serrage (41) par le biais d'une connexion inamovible.

4. Colonne de direction selon l'une quelconque des revendications précédentes, **caractérisée en ce que** la portion de fixation (46) du boulon de serrage (41) comprend une portion à filetage extérieur qui est vissée et fixée de manière inamovible dans un filetage intérieur correspondant à celle-ci dans la portion d'arbre (51) de l'élément de fixation (5) .

5. Colonne de direction selon l'une quelconque des revendications précédentes, **caractérisée en ce que** la portion d'arbre (51) de l'élément de fixation (5) est réalisée sous forme cylindrique.

6. Colonne de direction selon l'une quelconque des revendications précédentes, **caractérisée en ce que** la portion de tête (52) de l'élément de fixation (5) présente un embout d'outil (54).

7. Colonne de direction selon l'une quelconque des revendications précédentes, **caractérisée en ce que**, mesuré dans la direction axiale du boulon de serrage (41), la portion d'arbre (51) présente une plus grande dimension que la portion de tête (52).

8. Colonne de direction selon l'une quelconque des revendications précédentes, **caractérisée en ce que** le mécanisme de levage (42) est connecté à un élément d'actionnement manuel (45).

9. Colonne de direction selon l'une quelconque des revendications précédentes, **caractérisée en ce que** le mécanisme de levage (42) est connecté à un entraînement de levage motorisé.

10. Colonne de direction selon l'une quelconque des revendications précédentes, **caractérisée en ce que** l'unité de réglage (2) présente une unité d'enveloppe (25) qui présente des ouvertures de passage (26) en affleurement avec les ouvertures (35, 36) dans les joues latérales (32, 33), à travers lesquelles s'étend au moins en partie la portion d'arbre (51) de l'élément de fixation (5).
